# EUROPEAN PATENT APPLICATION

(11) **EP 2 690 538 A1**
(43) Date of publication of application: **29.01.2014**
(21) Application number: 12178388.0
(22) Date of filing: 27.07.2012
(51) Int. Cl.: G06F 3/048, G06F 3/041

(54) **Electronic device including touch-sensitive display and method of controlling same**

(71) Applicant: BlackBerry Limited, Waterloo, ON N2K 0A7 (CA)
(72) Inventor: Singh, Amit Pal, Waterloo, Ontario, N2L 3W8 (CA); Robinson, James Alexander, Waterloo, Ontario, N2L 3W8 (CA); Dolson, John Edward, Kanata, Ontario, K2K 3K1 (CA)
(74) Representative: Fennell, Gareth Charles

(57) **Abstract**

A method includes displaying a selectable feature on a touch-sensitive display of an electronic device, detecting a touch at a location within a target area associated with the selectable feature, and adjusting the target area based on a contact area of the touch and a magnitude of at least one signal when the touch is detected.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in devices with touch-sensitive displays are desirable.

### Summary

A method includes displaying a selectable feature on a touch-sensitive display of an electronic device, detecting a touch at a location within a target area associated with the selectable feature, and adjusting the target area based on a contact area of the touch and a magnitude of at least one signal when the touch is detected. An electronic device includes a touch-sensitive display and a processor coupled to the touch-sensitive display and configured to display a selectable feature on the touch-sensitive display, detect a touch at a location within a target area associated with the selectable feature, and adjust the target area based on a contact area of the touch and a magnitude of at least one signal when the touch is detected.

### Brief Description of the Drawings

FIG. 1 is a block diagram of a portable electronic device in accordance with the disclosure.

FIG. 2 is a flowchart illustrating a method of controlling a touch-sensitive display in accordance with the disclosure.

FIG. 3 is a flowchart illustrating a method of adjusting a target area associated with a selectable feature in accordance with the disclosure.

FIG. 4 through FIG. 7 illustrate examples of selection of features in accordance with the disclosure.

### Detailed Description

The following describes an electronic device and a method of facilitating selection of features displayed on a touch-sensitive display of an electronic device. The method includes displaying a selectable feature on a touch-sensitive display of an electronic device, detecting a touch at a location within a target area associated with the selectable feature, and adjusting the target area based on a contact area of the touch and a magnitude of at least one signal when the touch is detected.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein, Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The electronic device may be a portable electronic device without wireless communication capabilities, such as a handheld electronic game, digital photograph album, digital camera, media player, e-book reader, and so forth.

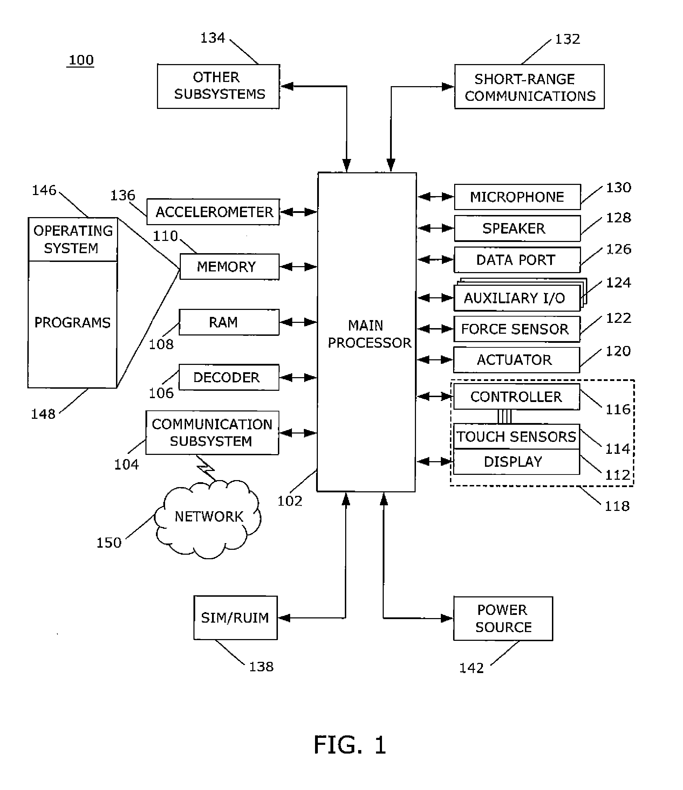

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be a capacitive touch-sensitive display that includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The optional actuator(s) 120 may be depressed or activated by applying sufficient force to the touch-sensitive display 118 to overcome the actuation force of the actuator 120, The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

The touch-sensitive display 118 includes a display area in which information may be displayed, and a non-display area extending around the periphery of the display area. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Touch sensors may be disposed in the non-display area, which touch sensors may be extended from the touch sensors in the display area or distinct or separate touch sensors from the touch sensors in the display area. A touch, including a gesture, may be associated with the display area, the non-display area, or both areas. The touch sensors may extend across substantially the entire non-display area or may be disposed in only part of the non-display area.

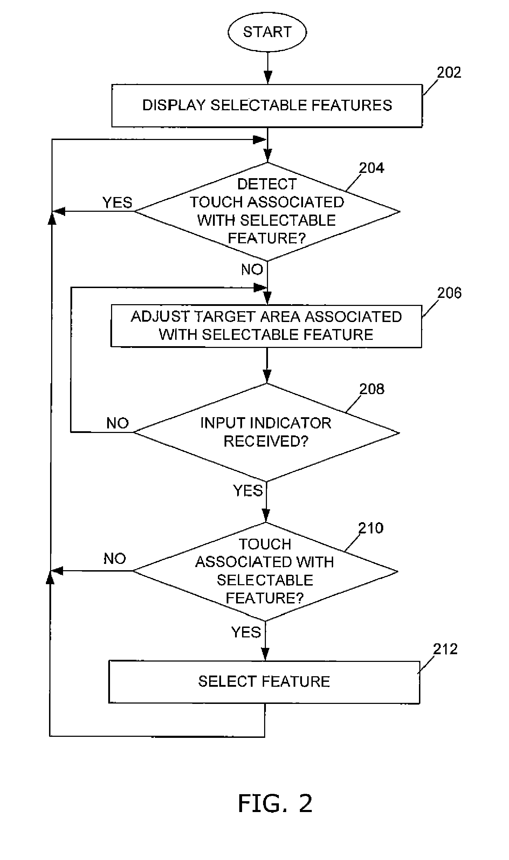

A flowchart illustrating a method of controlling a touch-sensitive display 118 is shown in FIG. 2. The method may be carried out by software executed, for example, by the controller 116. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, such as a non-transitory computer-readable medium.

Information is displayed 202 on the touch-sensitive display 118. The information includes selectable features, such as keys of a virtual keyboard, icons, selection options, and so forth. Selectable features are assigned to target areas of the touch-sensitive display 118. A selectable feature is selected or input when a touch is detected at a location within or partially within the target area associated with the selectable feature. The target areas associated with the selectable features are assigned prior to detecting a touch. The target area may have boundaries that align with the displayed boundaries of a selectable feature, or may have different boundaries from the displayed boundaries. For example, the target area may be larger or smaller than the displayed area of the selectable feature. The target area may have a different shape than the displayed area of the selectable feature. One or more boundaries of the target area may be larger than corresponding areas of the displayed area of the selectable feature, while another boundary or boundaries may be smaller than corresponding areas of the displayed area of the selectable feature.

When a touch associated with one of the selectable features is detected 204, the process continues at 206. The touch sensors 114 includes drive electrodes and sense electrodes. The touch may be detected based on a signal or signals from the sense electrodes 114 to the controller 116. Based on the signal or signals, the controller 116 reports a touch location, a contact area, and a magnitude of the touch signal to the processor 102. The magnitude of the touch signal, which may be referred as the magnitude of the signal, is a value representative of the strength of the signal received by the controller 116 from sense electrodes when a touch occurs. A signal from a sense electrode is a measurement of an electrical value, such as a voltage across the sense electrode. The magnitude of the signal is a numerical value representative of the magnitude of the electrical value, such as the voltage. The value of the magnitude of the signal may differ depending on the controller 116 that is utilized. For example, the highest or largest value received from a sense electrode during a scan of the touch-sensitive display 118 may be utilized as the magnitude of the touch signal, Alternatively, the controller 116 may filter the signals received by the controller from the sense electrodes during a scan such that signals that correspond to nodes or locations that are near the touch, or within a threshold distance of a center of the touch, are multiplied by a first scaling factor to provide a first set of values. Other signals from the sense electrodes during other frames of the same scan may be multiplied by a second scaling factor to provide a second set of values. The first set of values and the second set of values may be averaged to provide the magnitude of the touch signal. Alternatively, the controller 116 may filter the signals from a scan of the touch-sensitive display 118 such that signals received during frames of the scan, which correspond to nodes or locations that are near the touch or are within a threshold distance of the center of the touch, are averaged to provide a value of the magnitude of the touch signal. Other processes may be utilized to determine the magnitude of the (touch) signal. The touch is associated with one of the selectable features when the touch location is within or partially within the target area associated with the selectable feature.

The target area associated with the selectable feature is adjusted 206 based on a contact area of the touch and based on the magnitude of the signal from the touch sensors 114. The contact area varies based on the size of the input member and other factors. For example, a contact area for a relatively large finger is greater than a contact area for a relatively small finger. The magnitude of the signal is based on the force applied by the input member. For example, the magnitude of the signal when a finger presses with greater force on the touch-sensitive display is greater than the magnitude of the signal when a finger presses relatively lightly on the touch-sensitive display 118. The difference in magnitude of the signal results from greater capacitive coupling when greater force is applied on the touch-sensitive display 118. The target area is resized based on both contact area and magnitude of signal or signal strength. The size of the displayed selectable feature may optionally change with the change in target area.

The target area may be resized by moving one or more boundaries by one distance outwardly to expand the target area. Alternatively, the target area may be resized by moving boundaries outwardly by different factors or distances. For example, boundaries may be moved based on a distance to a detected touch, such that a boundary or boundaries closest to a detected touch may be moved farther outwardly than boundaries that are farther from the detected touch.

During the touch, multiple scans of the touch-sensitive display 118 may be performed. Each scan may include multiple frames in which signals from sense electrodes are received at the controller 116 while drive electrodes are driven. For a scan, the target area associated with the selectable feature may be adjusted by resizing (including reshaping) the target area. The may be resized multiple times before an input indicator is received 208. The input indicator may be received by the processor 102 and indicates when the optional actuator 120 is actuated, when the touch meets a force threshold, or when the touch ends, to name a few examples. The end of the touch is detected 208 when a signal corresponding to the touch is no longer received by the processor 102

When the touch is associated 210 with the selectable feature, the process continues at 212. The touch is associated with the selectable feature when, for example, the touch location is within the resized target area associated with the selectable feature. When the input indicator is the end of the touch, the touch is associated with the selectable feature when the last-reported touch location is associated within the resized target area. The last-reported touch location is the touch location that is reported by the controller 116 to the processor 120, prior to and closest to the end of the touch. When the last-reported touch location is associated 210 with the selectable feature, the feature is selected 212.

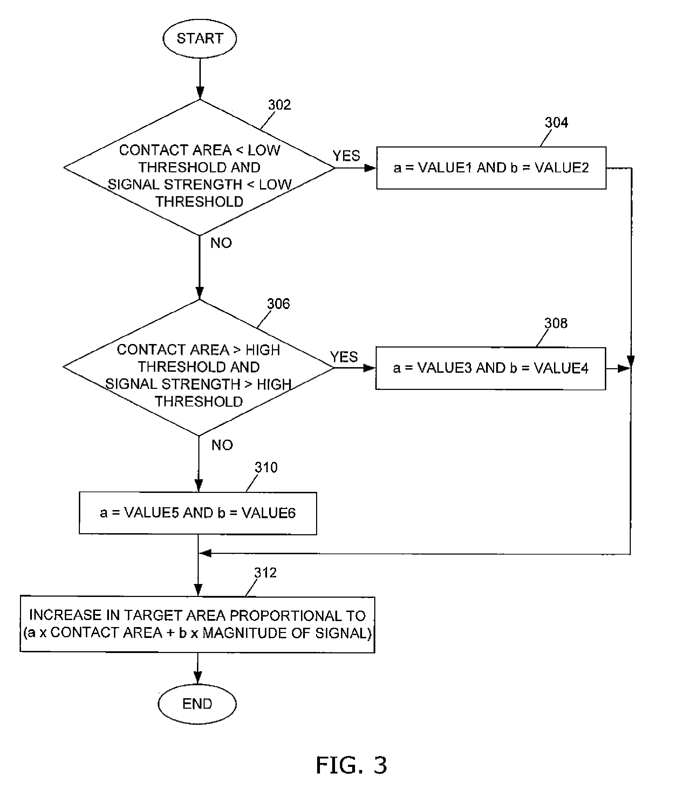

A flowchart illustrating one example of a method of adjusting the target area associated with the selectable feature is shown in FIG. 3. The method may be carried out by software executed, for example, by the controller 116. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, such as a non-transitory computer-readable medium.

The target area may be resized such that an increase in target area from a starting point is proportional to [a(contact area) + b(magnitude of signal)], where a and b are constants that may be, for example, empirically determined based on touch panel properties, such as sensor pitch, and/or based on operation history, such as other touch data. The values of a and b may be values, for example, between 0 and 1. The value of the contact area that is utilized to determine the proportional increase in size is a dimensionless value. The value of the magnitude of the signal is a dimensionless value.

When the contact area is less than a low area threshold, value and the magnitude of the signal is less than a low signal threshold value at 302, a is set 304 to a first value, VALUE1, and b is set 304 to a second value, VALUE2. The contact area and the magnitude of the signal may both be low, for example, when a touch begins or when a touch ends. The touch location accuracy may be low when a touch begins or when a touch ends and the target area associated with the selectable feature is determined 312 such that an increase in the target area is proportional to VALUE1(contact area) + VALUE2(magnitude of signal).

When the contact area is greater than a high area threshold value and the magnitude of the signal is greater than a high signal threshold value at 306, a is set 308 to a third value, VALUE3, and b is set 308 to a fourth value, VALUE4. The contact area and the magnitude of the signal may both be high, for example, when a large finger contacts the touch-sensitive display 118 with a high applied force. The touch location accuracy may be low, and the target area associated with the selectable feature is determined 312 such that an increase in the target area is proportional to VALUE3(contact area) + VALUE4(magnitude of signal).

When the contact area is not less than the low area threshold and not greater than the high area threshold, or when the magnitude of the signal is not less than the low signal threshold and not greater than the high signal threshold, a is set 310 to a fifth value, VALUE5, and b is set 310 to a sixth value, VALUE6. The fifth value and the sixth value may be, for example, zero or an extremely small number less than 1, such that the target area associated with the selectable feature is not increased when the contact area or the magnitude of the signal are within a range based on the low and high thresholds.

The flowchart of FIG. 3 is shown to describe one example of adjusting the target area associated with the selectable feature. Other values may be assigned to a and b. For example, further values may be assigned to a and b when the contact area is below the low area threshold and the magnitude of the signal is not below the low signal threshold. Further values may also be assigned to a and b when the contact area is above a high area threshold and the magnitude of the signal is below the low signal threshold. Other values may be assigned to a and b based on the contact area and the magnitude of the signal.

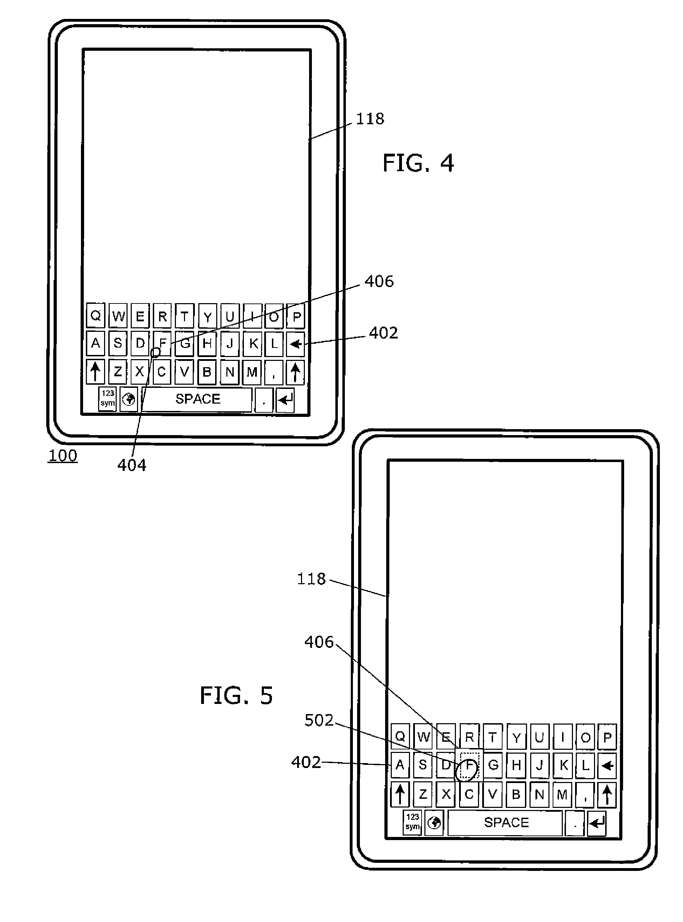

Front views of an electronic device illustrating examples of selection of features are shown in FIG. 4 through FIG. 7. A plurality of selectable features, which in these examples are keys of a keyboard 402, is displayed on the touch-sensitive display 118 of the portable electronic device 100. A touch is detected at a touch location 602, shown as an ellipse in FIG. 4, when touch contact begins and signals are received at the processor 102. The touch is associated with the selectable feature 406 because the touch location is within the target area associated with the selectable feature 406. The signals received at the processor 102 include the touch location, the contact area, and the magnitude of the signal from the touch-sensors to the controller 116.

A touch is detected at touch location 502, shown as an ellipse in FIG. 5, when touch contact begins and signals are received at the processor 102. The signals received at the processor 102 include the touch location, the contact area, and the magnitude of the signal from the touch-sensors to the controller 116. The contact area of the touch illustrated in FIG. 5 is larger than the contact area of the touch illustrated in FIG. 4. In this example, the contact area of the touch illustrated by the ellipse 502 is greater than the high area threshold value and the magnitude of the signal is greater than the high signal threshold value. The target area associated with the selectable feature 406 is increased by resizing the target area of the selectable feature 406 based on both the contact area and the magnitude of the signal. The target area associated with the selectable feature 406 is greater in FIG. 5 than in FIG. 4. The displayed area for the selectable feature 406 remains the same in this example.

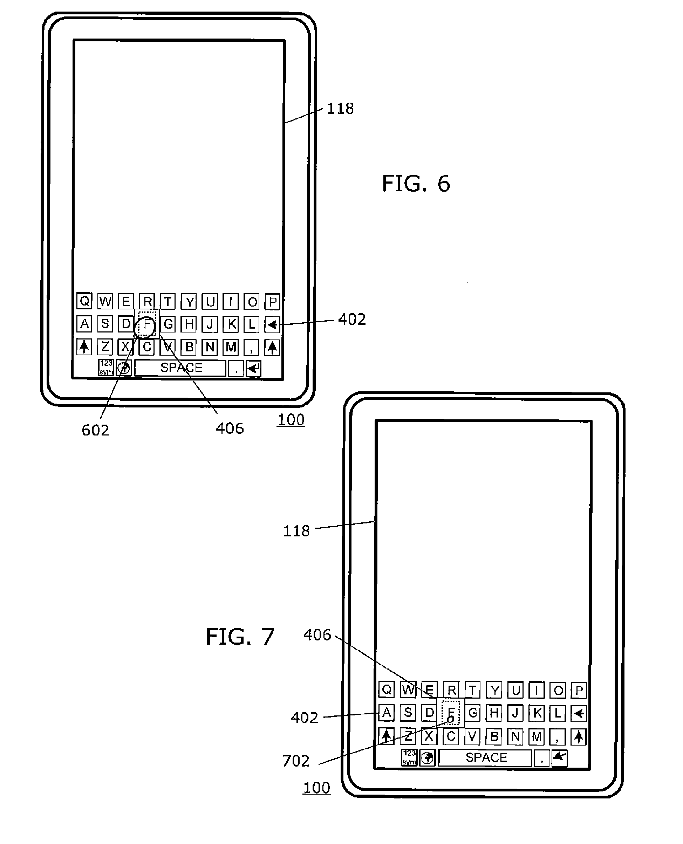

Another example of a method of selection of features is illustrated in FIG. 6. A touch, is detected at touch location 602, shown as an ellipse in FIG. 6, when touch contact begins and signals are received at the processor 102. In this example, the contact area of the touch illustrated by the ellipse 502 is greater than the high area threshold value and the magnitude of the signal is greater than the high signal threshold value. The target area associated with the selectable feature 406 is increased by resizing the target area of the selectable feature 406 based on both the contact area and the magnitude of the signal. The target areas associated with the other keys of the keyboard 402, such as keys adjacent to the target area of the selectable feature 406, are optionally decreased to accommodate the increase in size of the target area associated with the selectable feature 406. The target area associated with the selectable feature 406 is greater in FIG. 6 than in FIG. 4. In this example, the displayed area of the selectable feature 406 is also increased. The displayed area may be the same as the target area, smaller than the target area, larger than the target area, or of a different shape.

A touch is detected at touch location 702, shown as an ellipse in FIG. 7, when touch contact begins and signals are received at the processor 102. The signals received at the processor 102 include the touch location, the contact area, and the magnitude of the signal from the touch-sensors to the controller 116. In this example, the contact area of the touch illustrated by the ellipse 702 is less than the low area threshold value and the magnitude of the signal is less than the low signal threshold value. The target area associated with the selectable feature 406 is increased by resizing the target area of the selectable feature 406 based on both the contact area and the magnitude of the signal. The target area associated with the selectable feature 406 is greater in FIG. 7 than in FIG. 4. In this example, the displayed area of the selectable feature 406 is also increased. The displayed area may be the same as the target area, smaller than the target area, larger than the target area, or of a different shape.

Resizing of target areas associated with selectable features is based on both contact area and the magnitude of the touch signal at the controller 116. The chance of inaccuracy of a touch on the touch-sensitive display 118 is greater, for example, for a large contact area resulting from a large finger pressing with high applied force compared to a normal or average applied force on the touch-sensitive display 118 than a small finger pressing on the display. Inaccuracy of a touch may also be greater for a small contact area with relatively low applied force. The target area associated with a selectable feature may be increased to reduce the chance of incorrect selection.

A method includes displaying a selectable feature on a touch-sensitive display of an electronic device, detecting a touch at a location within a target area associated with the selectable feature, and adjusting the target area based on a contact area of the touch and a magnitude of at least one signal when the touch is detected.

An electronic device includes a touch-sensitive display and a processor coupled to the touch-sensitive display and configured to display a selectable feature on the touch-sensitive display, detect a touch at a location within a target area associated with the selectable feature, and adjust the target area based on a contact area of the touch and a magnitude of at least one signal when the touch is detected.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
displaying a selectable feature on a touch-sensitive display of an electronic device;
detecting a touch at a location within a target area associated with the selectable feature;
adjusting the target area based on a contact area of the touch and a magnitude of at least one touch signal when the touch is detected.

2. The method according to claim 1, wherein adjusting comprises resizing the target area.

3. The method according to claim 1, wherein adjusting comprises increasing the target area.

4. The method according to claim 1, wherein adjusting comprises resizing the target area based on a comparison of the contact area to at least one threshold value.

5. The method according to claim 1, wherein adjusting comprises resizing the target area based on a comparison of the magnitude of the at least one touch signal to at least one threshold value.

6. The method according to claim 1, wherein adjusting comprises resizing such that a change in size of the target area is proportional to a contact area of the touch plus a magnitude of the at least one touch signal associated with the touch.

7. The method according to claim 1, wherein adjusting comprises resizing such that a change in size of the target area is proportional to [a(contact area) + b(magnitude of the at least one touch signal)], wherein a and b are determined based on a comparison of the contact area to at least one threshold contact area and based on a comparison of the magnitude of the at least one touch signal to at least one threshold signal value.

8. The method according to claim 1, wherein adjusting comprises resizing target areas associated with other selectable features.

9. The method according to claim 1, wherein adjusting comprises increasing the target area and reducing sizes of target areas associated with adjacent selectable features.

10. The method according to claim 1, comprising:
detecting an end of the touch;
selecting the selectable feature when a last-reported touch location is associated with the adjusted target area.

11. The method according to claim 10, wherein the selectable feature is not selected when the last-reported touch location is not associated with the adjusted target area.

12. The method according to claim 1, comprising:
detecting an end of the touch;
selecting the selectable feature based on a last-reported touch location.

13. The method according to claim 1, comprising repeating adjusting until an input of a selectable feature is received.

14. A computer-readable storage medium having computer-readable code executable by at least one processor of the portable electronic device to perform the method of claim 1.

15. An electronic device comprising:
a touch-sensitive display;
a processor coupled to the touch-sensitive display and configured to:
display a selectable feature on the touch-sensitive display;
detect a touch at a location within a target area associated with the selectable feature;
adjust the target area based on a contact area of the touch and a magnitude of at least one touch signal when the touch is detected.
